# EUROPÄISCHE PATENTANMELDUNG

(11) **EP 1 197 254 A1**
(43) Veröffentlichungstag der Anmeldung: **17.04.2002**
(21) Anmeldenummer: 01119584.9
(22) Anmeldetag: 16.08.2001
(51) Int. Cl.: B01D 46/52, B31D 5/04

(54) **Gefalteter räumlicher Gegenstand insbesondere Filterelement**

(30) Priorität: 06.10.2000 DE 10049980
(71) Anmelder: Carl Freudenberg KG, 69469 Weinheim (DE)
(72) Erfinder: Schlör, Ulrich, 64297 Darmstadt (DE); Kadel, Werner, 69488 Birkenau (DE)

(57) **Zusammenfassung**

Aus einem flächigen Werkstück gefalteter räumlicher Gegenstand, insbesondere aus einem Vliesstoff gefaltetes Filterelement, wobei der räumliche Gegenstand (20) aus mehreren Reihen (5, 6, 7) von aneinandergereihten und ineinandergeschachtelten, hohlen Pyramidenelementen (30) besteht.

## Beschreibung

### Technisches Gebiet

Für verschiedene Zwecke, sei es zur Verstärkung sandwichartiger Platten oder auch als dekorative Lampenschirme und auch im technischen Bereich als Filterelemente werden gefaltete räumliche Gegenstände benutzt, die aus ursprünglich flächigen Werkstücken aufgefaltet wurden. Sofern es sich um zick-zack-förmig gefaltete Gegenstände handelt, ist deren maschinelle Herstellung möglich und vielfach erprobt. Schwieriger gestaltet sich die Erstellung von räumlichen Geometrien, die von der Zick-Zack-Form abweichen.

### Stand der Technik

Für die Erstellung von zick-zack-förmigen, gefalteten Filtern ist aus der DE 44 35 532A1 bekannt, das Filtermaterial in Form einer kontinuierlichen Bahn vorzuprägen, zick-zack-förmig zu falten und anschließend zu fixieren.

### Darstellung der Erfindung

Der Erfindung liegt die Aufgabe zugrunde, aus einem flächigen Werkstück durch Auffalten einen räumlichen Gegenstand herzustellen, der vielseitig verwendet werden kann. Der Gegenstand soll ein dekoratives Aussehen haben, zum Beispiel hinsichtlich von dekorativen Beleuchtungseffekten. Außerdem sollen filtertechnische und auch akustische Eigenschaften möglich sein. Dabei wird das Filterelement bevorzugt aus einem Vliesstoff hergestellt. Die Lösung der gestellten Aufgabe erfolgt erfindungsgemäß dadurch, dass der räumliche Gegenstand aus mehreren Reihen von aneinandergereihten und ineinandergeschachtelten, hohlen Pyramidenelementen besteht. Es handelt sich hier um Pyramidenelemente von besonderer Form - die Grundkante ist dreidimensional. Sie bestehen jeweils aus zwei spiegelbildlichen Halbteilen. Ihre dreidimensionale Grundfläche hat zwei mit ihren kleineren Grundlinien aneinanderstoßende Trapeze. Jedes Halbteil hat eine Hauptfläche und zwei seitlich daran anschließende, zum Inneren der Pyramidenelemente gerichtete Nebenflächen, wobei die Nebenflächen der sich gegenüberstehenden Halbteile mit ihrem innenliegenden Falz miteinander verbunden sind. Die Hauptflächen und / oder die Nebenflächen sind in einem Winkelbereich über 30°, vorzugsweise zwischen 60° und 80°, zur Grundfläche des Elements gefaltet. Dieses ist der bevorzugte Bereich für Filterelemente. Andere Bereiche, insbesondere für andere Zwecke als die Filterung sind selbstverständlich möglich.

Die hintereinander in einer Reihe liegenden Pyramidenelemente schließen an ihren Querfalzen und die Pyramidenelemente der nebeneinander liegenden Reihen an ihren Längsfalzen aneinander an. Die Pyramidenelemente sind somit sechsseitig ausgebildet, mit zwei Hauptflächen und vier zum Inneren der Pyramidenelemente gerichteten Nebenflächen.

Zur Unterstützung der maschinellen Faltung sind die Nebenflächen mit einem elastischen Bereich versehen. Bevorzugt wird dieser elastische Bereich durch eine fächerförmig ausgerichtete Wellenprägung gebildet. Denkbar ist hier jedoch auch die Gestaltung des Materials selbst als elastisch, so dass ein ausreichendes Zusammendrücken und Auseinandergehen des Materials bei seiner Faltung erzielt werden kann.

Der so hergestellte Gegenstand kann verschiedene Endformen einnehmen. Eine Möglichkeit besteht darin, den Gegenstand zu einem Zylinder zusammenzurollen. Die Schnittstelle des zusammengerollten Zylinders wird hierbei bevorzugt durch eine verschachtelte Überlappung ausgeführt. An seinen Rändern kann der Zylinder in ringförmige Rahmen eingefasst werden. Ein solcher Zylinder hat dann etwa die Form einer Laterne beziehungsweise einer Filterpatrone, je nach Einssatzzweck.

Gegenstände mit kalottenförmigen Hilfsflächen können mit einem Rahmen, insbesondere aus einem polymeren Werkstoff, eingefasst werden.

Das Verfahren zur Herstellung des Gegenstandes zeichnet sich dadurch aus, dass das flächige Werkstück mit parallelen Längs-Sollknickstellen und senkrecht dazu stehenden, ebenfalls parallelen Quer-Sollknickstellen versehen wird, wobei ein aus Rechtecken bestehendes Rechteckmuster entsteht, bei dem der Abstand der Quer-Sollknickstellen zueinander doppelt so groß ist wie der Abstand der Längs-Sollknickstellen zueinander ist. Dabei werden jeweils zwei in einer Reihe liegende, benachbarte Rechtecke zu quadratischen Teilflächen zusammengefasst, wobei die einzelnen Teilflächen um eine halbe Kantenlänge gegeneinander versetzt sind. Die Diagonalen dieser Teilflächen werden ebenfalls mit Soll-Knickstellen versehen, die zu den Längs- und Quer-Sollknickstellen in entgegengesetzter Richtung faltbar sind, und das so vorbereitete Werkstück wird entlang der Soll-Knickstellen in von den Knickstellen vorgegebenen Richtungen einem Auffaltvorgang unterworfen. Die Anbringung der Sollknickstellen erfolgt mit an sich bekannten Methoden. Der Faltvorgang am Werkstück wird durch Abstützung der Knickkanten zweier benachbarter Hauptflächen der Pyramidenelemente von der einen Seite des Werkstücks her und durch Eindrücken der Hauptflächen der Pyramidenelemente von der anderen Seite des Werkstücks her vorgenommen. Die Abstützung wird über flache Stützeinheiten mit Falzkante und das Eindrücken über dagegendrückende, aus gleichschenkligen, dreieckigen, um ihre Basislinie schwenkbare Druckplatten gleicher Größe durchgeführt. Während des Falzvorganges werden die Druckplatten aus ihrer ebenen Lage in das Werkstück eingeschwenkt.

Während des Falzvorgangs vollführen die Stützeinheiten und die Druckplatten eine zum Fokuspunkt des Werkzeugs gerichtete Bewegung durch. Hierfür werden Stützplatten und Druckplatten synchron in einem zweiachsigen Führungssystem mit orthogonal angeordneten Achsen bewegt.

Gegenstand der vorliegenden Anmeldung ist auch eine Vorrichtung zur Herstellung des gefalteten Gegenstandes bzw. zur Durchführung des Verfahrens zur Herstellung des Gegenstandes. Diese Vorrichtung wird mit einer das flächige Werkstück aufnehmenden Pressenöffnung versehen, die mehrere in Reihen auf der Matrizenseite angeordnete Stützeinheiten und ebenfalls mehrere in Reihen auf der Patrizenseite angeordnete, mit den Stützeinheiten korrespondierende Druckplatten hat, wobei letztere aus einer ebenen Lage um ihre Basislinie in eine Winkellage dazu schwenkbar sind. Zusätzlich zu dieser Schwenkbewegung sind die Stützeinheiten und die Druckplatten während der Schwenkbewegung der Druckplatten an rechtwinklig zueinander angeordneten, in der Horizontalebene liegenden Führungsschienen geführt und bewegen sich in Richtung eines Fokuspunkts der Presse.

Die Druckplatten selbst bestehen aus gleichschenkligen, rechtwinkligen Dreiecken, die an ihren Basislinien durch ein Scharnier miteinander verbunden sind. Die Kantenlängen der Stützeinheiten und die Längen der Basislinien sind gleich. Die Betätigung der Druckplatten erfolgt durch Stößel, die paarweise vorhanden sind. Dabei können die Stößel über einen Parallellenker geführt sein.

### Kurzbeschreibung der Zeichnungen

Anhand eines Ausführungsbeispiels wird die Erfindung näher erläutert.

Es zeigen:
- Figur 1:: ein flächiges Werkstück mit Sollknickstellen in der Draufsicht,
- Figur 2:: das Werkstück nach Figur 1 mit angesetzten Stützeinheiten,
- Figur 3:: den gefalteten Gegenstand in der Schrägansicht von oben,
- Figur 4:: den gefalteten Gegenstand in der Schrägansicht von unten,
- Figur 5:: eine einzelne Stützeinheit mit zugehörigen Druckplatten in der seitlichen Schrägansicht und
- Figur 6:: schematisch zwei Reihen von Stützeinheiten und Druckplatten in der Seitenansicht.

### Ausführung der Erfindung

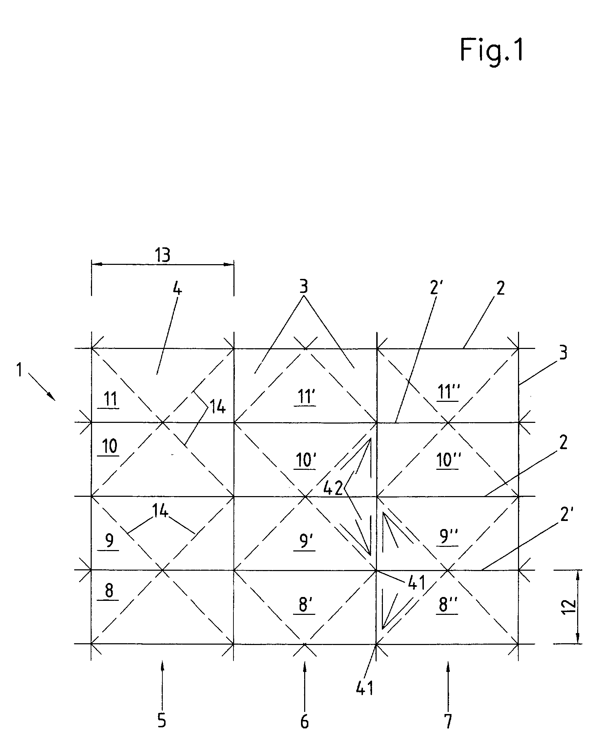

Die in den Zeichnungen dargestellten Ausführungsbeispiele beziehen sich auf die Herstellung eines Filterelements aus einem Vliesstoff. In der Figur 1 ist ein flächiges Werkstück 1 gezeigt, das aus einer Vliesstoffbahn abgeschnitten wurde. Dieses Werkstück 1 ist von seinen Materialeigenschaften her so ausgewählt, dass es zur Herstellung eines Filterelements geeignet ist. Das Werkstück 1 wird auf seiner in der Zeichnung gesehen obenliegenden Seite mit den Sollknickstellen 2, 2' und 3 versehen. Die Sollknickstellen 2, 2' und 3 sind auf der Oberseite 4 des Werkstücks 1 angebracht. Die Längs-Sollknickstellen 2 und 2' verlaufen parallel zueinander die Quer-Sollknickstellen 3 sind ebenfalls parallel zueinander ausgerichtet und stehen senkrecht zu den Längs-Sollknickstellen 2 und 2'. Der Abstand der Quer-Sollknickstellen 3 zueinander ist doppelt so groß wie der Abstand der Längs-Sollknickstellen 2 und 2' zueinander. Auf diese Weise entsteht ein Rechteck-Muster aus in Reihen 5, 6 und 7 liegenden Rechtecken 8, 9, 10,11 beziehungsweise 8', 9', 10', 11' und 8", 9", 10", 11". Jeweils zwei in einer Reihe 5 bis 7 liegende, benachbarte Rechtecke werden zu quadratischen Teilflächen zusammengefasst. Dabei werden die einzelnen Teilflächen um eine halbe Kantenlänge 12 gegeneinander versetzt. Im vorliegenden Beispiel sind in der Reihe 5 die Rechtecke 8 und 9, in der Reihe 6 die Rechecke 9' und 10' und in der Reihe 7 die Rechtecke 8" und 9" sowie 10" und 1" zusammengefasst. Auf diese Weise entstehen Quadrate. Die Diagonalen der Quadrate werden auf der anderen Seite des Werkstücks 1, in der bildlichen Darstellung auf der Unterseite, mit Sollknickstellen 14 versehen. Diese Sollknickstellen 14 haben zur Folge, dass das Werkstück an diesen Knickstellen entgegengesetzt zu den Knickstellen 2, 2' und 3 faltbar ist. Um die Pyramidenelemente 30 des räumlichen Gegenstands 20 zu bilden, wird das Werkstück 1 gemäß den vorgegebenen Sollknickstellen 2, 2', 3 und 14 gefaltet.

Zur Unterstützung des Faltvorgangs, insbesondere bei Gegenständen mit sehr hohen Pyramidenelementen 30 ist es vorteilhaft, wenn die Pyramidenelemente 30 in den Nebenflächen mit elastischen Bereichen 42 versehen sind, die während des Faltvorgangs eine Stauchung der Pyramidenwände ermöglichen. Diese Stauchung kann beispielsweise durch eine wellenförmige Ausbildung der Nebenflächen 34, 35 erzielt werden. In der Zeichnung sind nur beispielsweise einige Bereiche 42 eingezeichnet.

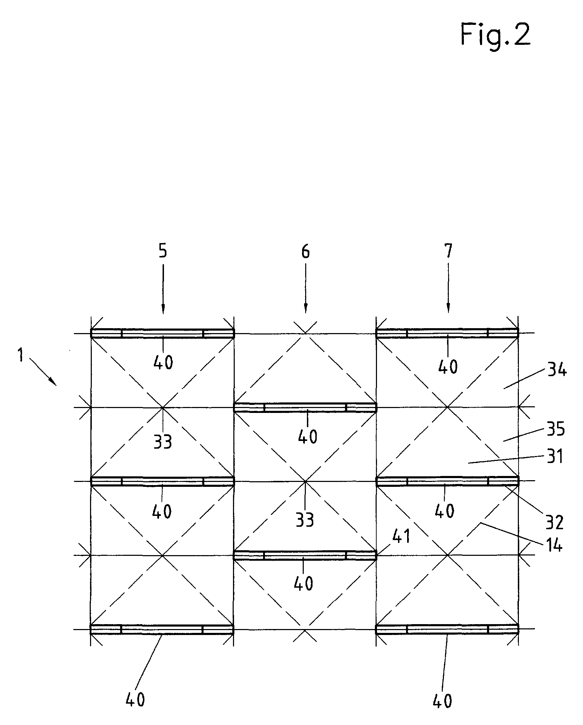

In der Figur 2 ist die gleiche Draufsicht wie nach der Figur 1 gezeigt mit der Ergänzung jedoch, dass Stützeinheiten 40, die für den Faltvorgang vorgesehen sind, bereits eingezeichnet sind. Wie aus der Figur 2 ersichtlich bilden die Stützeinheiten 40 die Begrenzung der quadratischen Teilflächen in de einzelnen Reihen 5 bis 7. Alle anderen Teile in der Figur 2 sind identisch mit Figur 1. Die Pyramidenelemente 30 werden durch Eindrücken der Hauptflächen 31 um die Stützeinheiten 40 gebildet. Die Hauptflächen werden durch eine Grundlinie 32 und die Diagonalen 14 begrenzt, so dass sie aus einem gleichschenkligen Dreieck bestehen. Die Spitzen 33 der Pyramidenelemente 30 liegen in den Schnittpunkten der Diagonalen 14. Durch den Faltvorgang entstehen bei dem gezeigten Ausschnitt in den Figuren 1 und 2 insgesamt fünf Pyramidenelemente 30 mit ihren Hauptflächen 31 und den Nebenflächen 34 und 35. Die Nebenflächen 34 und 35 sind durch die Sollknickstellen 3, 14 und 2' umgrenzt.

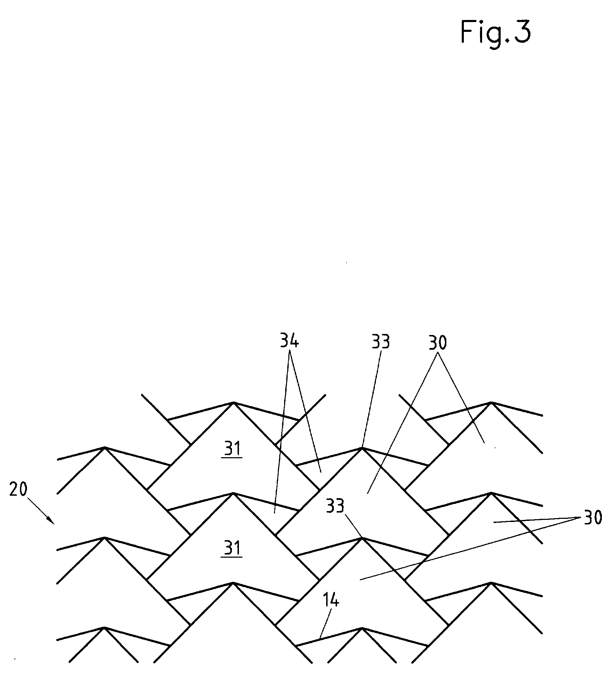

In der Figur 3 ist ein fertig gefalteter Gegenstand gezeigt, und zwar in der Ansicht von schräg oben. Die einzelnen Pyramidenelemente 30 bedecken einander. Sichtbar sind die Hauptflächen 31 und die bei den einzelnen Pyramidenelementen 30 nach innen in das Element gerichteten Nebenflächen 34. Die Nebenflächen 34 werden von den Falzen 2' und den Diagonalen Soll-Knickstellen 14 begrenzt. Nicht sichtbar, d.h. verdeckt, sind die Nebenflächen 35.

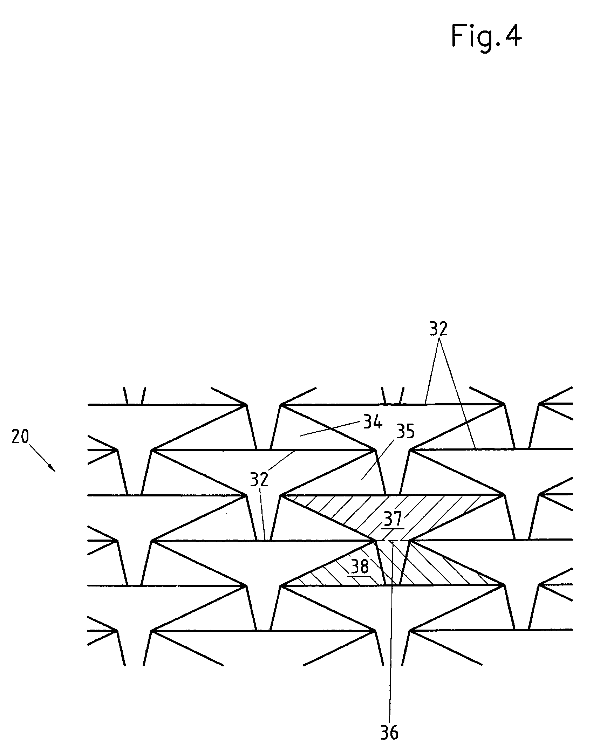

Die Figur 4 zeigt die andere Seite des gefalteten Gegenstands 20, in der Schrägansicht von unten. Sichtbar sind die in ihrer Faltenlänge gleichbleibenden Grundfalze 32, die an den Längs-Sollknickstellen 2 entstanden sind. Durch den Faltvorgang sind die Grundfalze ineinandergeschoben, was zu einem Ineinanderschachteln der einzelnen Pyramidenelemente 30 führt. Sichtbar sind die Nebenflächen 34 und 35. Erkennbar ist, dass die Grundfläche eines Pyramidenelements30 aus zwei Trapezen 37, 38gebildet ist. Jedes Trapez 37, 38 wird aus den Grundfalzen 32 für die Hauptfläche 31, den Falzen 3 und einer gedachten kleineren Grundlinie 36 gebildet. Die kleinere gedachte Grundlinie 36 liegt zwischen zwei in gleicher Linie liegenden Grundfalzen 32 der Hauptfläche 31. In der Figur sind die Trapeze 37 und 38 gestrichelt an einer Grundfläche eines Pyramidenelements 30 eingezeichnet.

Die Vorrichtung zur Durchführung des Verfahrens besteht im Wesentlichen aus einem Ober- und einem Unterteil. Die Grundplatten von Ober- und Unterteil sind flächenparallel angeordnet und werden während des Faltprozesses flächenparallel aufeinander zu bewegt. Im Oberteil befinden sich die Stützeinheiten, im Unterteil die Druckplattenelemente.

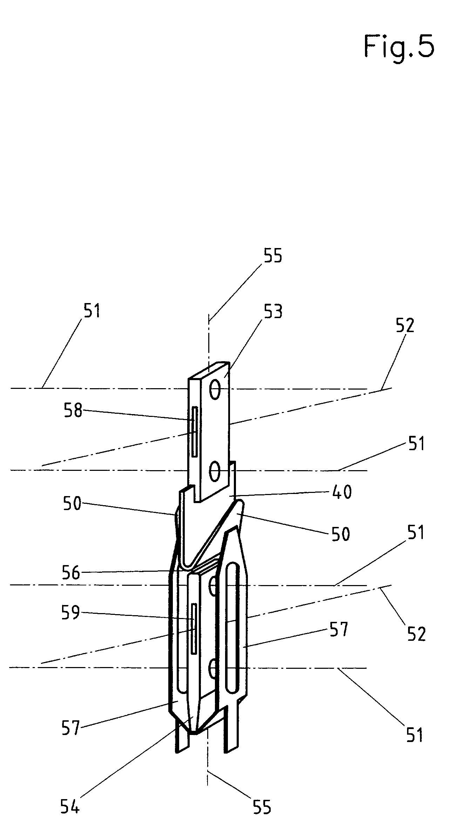

In der Figur 5 ist ein Einzelteil der Vorrichtung zur Herstellung des Gegenstandes gezeigt, wobei zu bemerken ist, dass die Vorrichtung aus einer Vielzahl solcher Einzelteile gebildet wird, je nach Größe des herzustellenden Gegenstands. In der schematischen Darstellung ist sichtbar die flache Stützeinheit 40 und die ihr gegenüberliegenden Druckplatten 50. Beide, sowohl die Stützeinheiten 40 als auch die Druckplatten 50 sind, wie mit den strichpunktierten Linien 51, 52 angezeigt, in senkrecht zueinander stehenden Ebenen während des Falzvorgangs verschiebbar. Die strichpunktierten Linien 51 zeigen die Achsrichtung an, die gleich ist mit der Richtung der Reihen 5 bis 7 des Werkstücks 1. Die strichpunktierten Linien 52 zeigen die rechtwinklig dazu verlaufende Achsrichtung an. Die Achsen 52 werden durch flache Führungselemente gebildet, die eine geführte, ausreichende Verschiebung der Halterungen 53 und 54 für die Stützeinheiten 40 für die Druckplatten 50 gewährleistet. Die nicht näher dargestellten Führungselemente werden in den Schlitzen 58 und 59 der Halterungen 53 und 54 geführt. Die Schlitze 58 und 59 lassen außerdem eine Bewegung auf den Halterungen 53 und 54 zueinander zu. Diese Bewegungsmöglichkeit ist durch die strichpunktierte Linie 55 angezeigt. Sie ist dafür erforderlich, dass der zu faltende Einzelbogen zwischen die Stützeinheiten 40 und die Druckplatten 50 eingelegt werden kann. In der Figur 5 sind die Druckplatten 50 bereits teilweise um ihre Basislinie 56 verschwenkt. Die Achsen 51 werden mit den Halterungen 53 und 54 mitbewegt. Es handelt sich hier um runde Führungsschienen, die mit den Halterungen 53 und 54 hoch und runter bewegt werden können, während die Halterungen selbst während des Faltvorgangs auf den Führungsschienen gleiten können.

Für die Betätigung der Druckplatten 50 sind die Pendelstützen 57 vorgesehen, die paarweise angeordnet sind und an ihren Enden über eine scherengitterartige Verbindung 58 miteinander verbunden sind.

Die Enden der Führungsstangen 51 und der Führungsleisten 52 sind in nicht dargestellten senkrecht genuteten Vertikalleisten fixiert. Dadurch ist eine vertikale Relativbewegung in Achse 55 der Stützelemente zu den Druckplatten und somit das Einlegen und Entnehmen des Werkstücks möglich. Nicht dargestellt ist die Anordnung der genuteten Vertikalleisten auf Scherengittern, womit eine äquidistante Verschiebung der Stütztelemente und Druckplatten sowohl in der Verschiebeachse 51 als auch in der Verschiebeachse 52 ermöglicht. Die Schwenkbewegung der Druckplatten 50 erfolgt über die Betätigung der Stößel 57. Dies wird erreicht durch Hochfahren der Grundplatte 60, auf der die Stößel 57 aufliegen.

Ein Stützelement besteht folglich im Wesentlichen aus einem spachtelähnlichen Element, das die Faltkante fixiert. Ein Druckplattenelement besteht im Wesentlichen aus zwei spiegelbildlich angeordneten dreieckigen, schwenkbaren Druckplatten. Diese falten jeweils die beiden spiegelbildlichen dreieckigen Hauptflächen des Gegenstands ein, wobei die beiden Hauptflächen eine gemeinsame Falte haben, welche durch das Stützelement fixiert wird. Die Druckplatten haben jeweils in der Hypotenuse ein Scharnier und werden durch Stößelelemente betätigt, die nach dem Prinzip des Parallellenkers gelagert sind.

Jeweils ein Stützelement und ein Druckplattenelement bilden ein Paar mit gemeinsamer Vertikalachse. Durch ein zweiachsiges Führungssystem sind alle Paare in zwei rechtwinklig zueinander liegenden Achsen in einer Ebene flächenparallel zu den Grundplatten verfahrbar. Die Druckplattenelemente haben mit dem Einschwenken der Druckplatten zusätzlich noch. einen dritten Freiheitsgrad in ihrer Bewegung. Die Bewegungen in den drei Achsen sind kinematisch verkoppelt und werden teilweise mechanisch verkoppelt nach dem Scherengitterprinzip. Die Stößelbewegung wird vorzugsweise elektrisch verkoppelt.

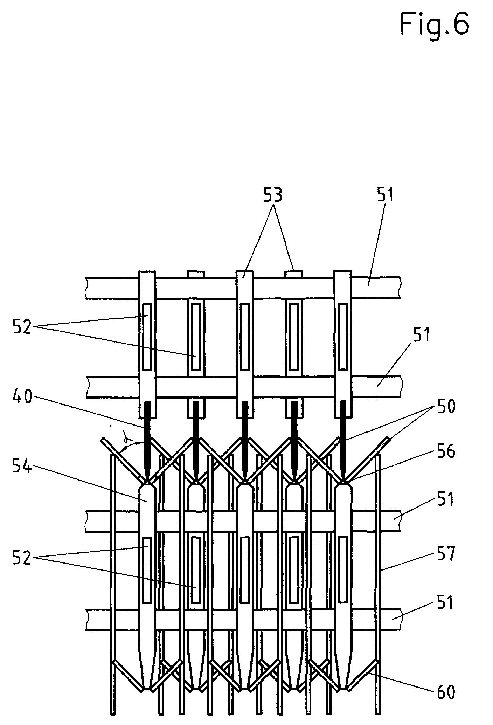

In der Figur 6 ist ein Ausschnitt der Vorrichtung in der Seitenansicht dargestellt. Dabei sind hier zwei Reihen hintereinanderliegender Stützeinheiten 40 und Druckplatten 50 gezeigt. Auch hier sind die Druckplatten 50 bereits teilweise verschwenkt. Um die Übersichtlichkeit zu wahren, ist das Werkstück 1 nicht eingelegt. Es befindet sich zwischen den Stützeinheiten 40 und den Druckplatten 50. Die Druckplatten 50 bewegen sich um die Scharniere 56 und schwenken nach oben. Die Schwenkbewegung wird durch die Parallellenker 60 gesteuert. Die Parallellenker 60 halten die Stößel 57, die paarweise angeordnet sind, in der vorgegebenen Lage. Während des Falzvorgangs wird das Werkstück 1 durch die Schwenkbewegung der Druckplatten 50 zusammengedrückt, dabei bewegen sich die Halterungen 53 und 54 aufeinander zu, so dass sich der Abstand zwischen Ihnen verringert. Sobald der gewünschte Faltwinkel des zu faltenden Gegenstands erreicht ist, der vergleichbar mit dem Winkel zwischen der Stützeinheit 40 und einer Druckplatte 50 ist, wird die Presse geöffnet, indem die Halterungen 53 und 54 auseinandergefahren werden, und der gefaltete Gegenstand 20 kann der Presse entnommen werden.

## Patentansprüche

1. Aus einem flächigen Werkstück gefalteter räumlicher Gegenstand, insbesondere aus einem Vliesstoff gefaltetes Filterelement, **dadurch gekennzeichnet, dass** der räumliche Gegenstand (20) aus mehreren Reihen (5, 6, 7) von aneinandergereihten und ineinandergeschachtelten, hohlen Pyramidenelementen (30) besteht.

2. Gegenstand nach Anspruch 1, **dadurch gekennzeichnet, dass** die Pyramidenelemente (30) jeweils aus zwei spiegelbildlichen Halbteilen bestehen.

3. Gegenstand nach einem der Ansprüche 1 oder 2, **dadurch gekennzeichnet, dass** die Grundfläche der Pyramidenelemente (30) aus zwei, mit ihren kleineren Grundlinien (36) aneinanderstoßenden Trapezen (36, 37) besteht.

4. Gegenstand nach einem der Ansprüche 1 bis 3, **dadurch gekennzeichnet, dass** die Halbteile der Pyramidenelemente (30) eine Hauptfläche (31) und zwei seitlich daran anschließenden, zum Inneren der Pyramidenelemente (30) gerichtete Nebenflächen (34, 35) haben, wobei die Nebenflächen (34, 35) der sich gegenüberstehenden Halbteile mit ihrem innenliegenden Falz, miteinander verbunden sind.

5. Gegenstand nach einem der Ansprüche 1 bis 4, **dadurch gekennzeichnet, dass** die Hauptflächen (31) und/oder die Nebenflächen (34, 35) in einem Winkelbereich von 30°, vorzugsweise zwischen 60° bis 80° zur Grundfläche des Gegenstands (30) gefaltet sind.

6. Gegenstand nach einem der Ansprüche 1 bis 5, **dadurch gekennzeichnet, dass** die hintereinander in einer Reihe (5, 6, 7) liegenden Pyramidenelemente (30) an ihren Querfalzen (3) und die Pyramidenelemente (30) der nebeneinanderliegenden Reihen über ihre Längsfalze (2, 2') aneinander anschließen.

7. Gegenstand nach einem der Ansprüche 1 bis 6, **dadurch gekennzeichnet, dass** die Pyramidenelemente (30) sechsseitig mit zwei Hauptflächen (31) und vier zum Inneren der Pyramidenelemente (30) gerichteten Nebenflächen (34, 35) ausgebildet sind.

8. Gegenstand nach einem der Ansprüche 1 bis 7, **dadurch gekennzeichnet, dass** die Nebenflächen (33, 34) mit einem elastischen Bereich versehen sind.

9. Gegenstand nach einem der Ansprüche 1 bis 8, **dadurch gekennzeichnet, dass** die elastischen Bereiche (42) durch Wellenprägungen gebildet sind.

10. Gegenstand nach einem der Ansprüche 1 bis 9, **dadurch gekennzeichnet, dass** der Gegenstand (20) zu einem Zylinder zusammengerollt ist.

11. Gegenstand nach Anspruch 10, **dadurch gekennzeichnet, dass** die Verbindungsstelle des Zylinders eine verschachtelte Überlappung darstellt.

12. Gegenstand nach einem der Ansprüche 10 oder 11, **dadurch gekennzeichnet, dass** der Zylinder mit seinen Rändern in einem ringförmigen Rahmen eingefasst ist.

13. Gegenstand nach einem der Ansprüche 1 bis 9, **dadurch gekennzeichnet, dass** der Gegenstand (20) mit einem Rahmen aus polymerem Werkstoff versehen ist.

14. Verfahren zur Herstellung eines Gegenstandes nach den Ansprüchen 1 bis 13, **dadurch gekennzeichnet, dass**
- das flächige Werkstück (1) mit parallelen Längs-Sollknickstellen (2, 2') und senkrecht dazu stehenden, ebenfalls parallelen Quer-Sollknickstellen (3) versehen wird, wobei ein aus Rechtecken (8 bis 11) bestehendes Rechteckmuster entsteht, bei dem der Abstand (13) der Quer-Sollknickstellen zueinander doppelt so groß ist wie der Abstand (12) der Längs-Sollknickstellen (2, 2') zueinander,
- jeweils zwei in einer Reihe (5, 6, 7) liegende, benachbarte Rechtecke (8, 9; 10, 11; 9', 10'; 8", 9"; 10", 11") zu quadratischen Teilflächen zusammengefasst werden, wobei die einzelnen Teilflächen um eine halbe Kantenlänge (12) gegeneinander versetzt sind,
- die Diagonalen der Teilflächen ebenfalls mit Sollknickstellen (14) versehen werden, die in zu den Längs- und Quer-Sollknickstellen (2, 2', 3) entgegengesetzter Richtung faltbar sind und
- das Werkstück (1) entlang der Sollknickstellen (2, 2', 3, 14) in von den Knickstellen vorgegebenen Richtungen einem Falzvorgang unterworfen wird

15. Verfahren nach Anspruch 14, **dadurch gekennzeichnet, dass** der Falzvorgang des Werkstücks (1) durch Abstützung der während des Vorgangs in ihrer Seitenlänge (13) gleichbleibenden Grundfalze (32) von der Oberseite des Werkstücks (1) her und durch Eindrücken der Hauptflächen (31) der Pyramidenelemente (30) des Werkstücks (1) von der Unterseite her erfolgt.

16. Verfahren nach einem der Ansprüche 14 oder 15, **dadurch gekennzeichnet, dass** die Abstützung über flache Stützeinheiten (40) mit Falzkante und das Eindrücken über dagegendrückende, aus gleichschenkligen, dreieckigen, um ihre Basislinie (56) schwenkbare Druckplatten (50) durchgeführt wird.

17. Verfahren nach einem der Ansprüche 14 bis 16, **dadurch gekennzeichnet, dass** die Druckplatten (50) während des Falzvorgangs aus ihrer ebenen Lage in das Werkstück (1) eingeschwenkt werden.

18. Verfahren nach einem der Ansprüche 15 bis 17, **dadurch gekennzeichnet, dass** die Stützeinheiten (40 ) und die Druckplatten (50) während des Falzvorgangs eine zum Fokuspunkt des Werkzeugs gerichtete Bewegung durchführen.

19. Verfahren nach einem der Ansprüche 15 bis 18, **dadurch gekennzeichnet, dass** die Stützeinheiten (40) und die Druckplatten (50) auf rechtwinklig zueinander angeordneten Führungsschienen (51, 52) bewegbar sind.

20. Verfahren nach einem der Ansprüche 1 bis 19, **dadurch gekennzeichnet, dass** die Horizontalabstände sowohl der Führungselemente (51) als auch der Führungselemente (52) zueinander äquidistant nach dem Scherengitterprinzip veränderbar sind.

21. Verfahren nach einem der Ansprüche 1 bis 20, **dadurch gekennzeichnet, dass** die Schwenkbewegung der Druckplatten (50) über Stößelelemente erfolgt, die nach dem Prinzip des Parallellenkers gelagert sind.

22. Verfahren nach einem der Ansprüche 1 bis 21, **dadurch gekennzeichnet, dass** die Bewegungen in den drei Achsen mechanisch oder elektromechanisch verkoppelt sind.

23. Vorrichtung zur Durchführung des Verfahrens nach den Ansprüchen 14 bis 22 bzw. zur Herstellung des Gegenstandes nach den Ansprüche 1 bis 14, **gekennzeichnet durch** eine das flächige Werkstück (1) aufnehmende Pressenöffnung mit mehreren in Reihen (5, 6, 7) auf der Matrizenseite angeordnete Stützeinheiten (40) und ebenfalls in Reihen (5, 6, 7) auf der Patrizenseite angeordnete, mit den Stützeinheiten (40) korrespondierende Druckplatten (50), die aus einer ebenen Lage um ihre Basislinie (56) in eine Winkellage dazu verschwenkbar sind.

24. Vorrichtung nach Anspruch 23, **dadurch gekennzeichnet, dass** die Stützeinheiten (40) und die Druckplatten (50) während der Schwenkbewegung der Druckplatten (50) an rechtwinklig zueinander angeordneten Führungsschienen (51, 52) geführt, sich in Richtung eines Fokuspunktes bewegen.

25. Vorrichtung nach Anspruch 23 oder 24, **dadurch gekennzeichnet, dass** die Druckplatten (50) aus gleichschenkligen, rechtwinkligen Dreiecken bestehen, die an ihren Basislinien (56) durch ein Scharnier miteinander verbunden sind.

26. Vorrichtung nach einem der Ansprüche 23 bis 25, **dadurch gekennzeichnet, dass** die Kantenlänge der Stützeinheiten (40) und die Länge (13) der Basislinien gleich sind.

27. Vorrichtung nach einem der Ansprüche 23 bis 26, **dadurch gekennzeichnet, dass** die Druckplatten (50) durch Stößel (57) betätigt sind.

28. Vorrichtung nach einem der Ansprüche 23 bis 27, **dadurch gekennzeichnet, dass** die Stößel (57) paarweise pro Stützelement vorhanden sind.

29. Vorrichtung nach einem der Ansprüche 23 bis 28, **dadurch gekennzeichnet, dass** die Stößel (57) über einen Parallellenker (60) fixiert sind.
